# EUROPEAN PATENT APPLICATION

(11) **EP 2 284 814 A1**
(43) Date of publication of application: **16.02.2011**
(21) Application number: 10184185.6
(22) Date of filing: 03.01.2006
(51) Int. Cl.: G08B 13/196

(54) **Systems and methods for night time surveillance**

(30) Priority: 03.01.2005 US 640244 P
(62) Divisional of application: 06717309.6
(71) Applicant: Vumii, Inc., Atlanta, Georgia 30328 (US)
(72) Inventor: Tamir, Michael, 69122 Tel Aviv (IL); Tsur, Michael, 69355 Tel Aviv (IL)
(74) Representative: Phillips & Leigh

(57) **Abstract**

A night surveillance system having camera (202) having a field of regard, an infrared laser (IR) illuminator (211) capable of producing an IR laser illumination beam (230), wherein there is a parallax between the illumination beam and the camera's field of regard; and a computer (150) capable of controlling the camera and the illuminator; parallax may created by separation of the camera unit (102) and the illumination unit (106), a safety module (128) capable of shutting off the illumination beam (230) may be provided and . a laser source (122) for the IR laser illuminator (211) may be a continuous wave laser.

## Description

### FIELD OF THE INVENTION

This invention relates generally to surveillance systems, and more particularly, embodiments of this invention relate to systems and methods for night vision surveillance systems.

### BACKGROUND OF THE INVENTION

Night vision cameras using infrared illuminators may provide high magnification, but this high magnification naturally results in a narrow instantaneous field of view. The narrow field of view is also due to the fact that, at a given range, diverging the illuminator's beam beyond a certain angle will entail a beam intensity insufficient for producing a useful image. This field of view limitation makes it difficult for users of such surveillance cameras to orient themselves in the surveyed area, especially when the area they need to cover is large and complex or when the momentary night vision view has a low information content.

One method that may be used to overcome this limitation is to systematically scan the field of regard in order to find conspicuous landmarks that may help locate the current field of view. Due to the nature of surveillance tasks, such a search procedure is not generally practical because it can consume valuable time in a moment of emergency. The derived long scanning time required by a surveillance camera to cover typical angular sectors defining the field of regard of the surveillance camera can be a problem.

Some night vision systems utilize laser infrared illuminators. Many of these systems utilize gated imaging technologies to overcome the atmospheric backscattering, considered the dominant noise mechanism. Using a gated imaging technology requires an expensive imager and complicated synchronization of the laser pulses with the imager. Additionally, a gated imaging based night vision system is susceptible to saturation due to intense light sources in the imager's field of view. The use of a conventional laser illuminator night vision system may also present eye safety problems and depending on the application may require a laser safety officer to be onsite with the night vision system.

Other night vision systems utilize active infrared lighting generated by LED bulbs with a camera set to pick up the projected light. These systems provide usable images only at short ranges, and the bulbs have a relatively short life, adding maintenance and operating cost to the system. In addition, these systems are also susceptible to saturation due to intense light sources in the imager's field of view.

Additional night vision systems use an Intensified CCD (ICCD) construction that relies on ambient light (e.g. starlight and moonlight) to be picked up by a sensitive CCD camera. These systems also have a short operating range, and do not work on overcast or moonless nights. In addition, they are susceptible to saturation due to intense light sources in the imager's field of view.

The most common night vision systems are based on thermal imaging, where the object's heat is used to generate an image of the product. With operator training, the resulting image can be used for detection, but not true identification, since no lettering and few image details can be viewed. In addition, uncooled thermal systems have short ranges, while cooled thermal systems have longer ranges, but are very expensive. Finally, adding a zooming capability to a thermal system is expensive, due to the need to use specialized lenses; due to this fact, many thermal systems are fixed focal length.

### STATEMENT OF THE INVENTION

A night vision surveillance system and method according to the present invention are set forth in the appended claims.

### SUMMARY OF THE INVENTION

Embodiments of the invention provide systems and methods for night time surveillance, including systems and methods, which provide a broad view of the surveyed area containing the current field of view. The systems and methods can enable a user to immediately understand where the current field of view is positioned, acquire the proper space orientation, and take the derived proper actions in case of threat detection. The systems and methods can also reduce the field of regard scanning time as well as the revisit time of a given point in the surveillance camera's scanned sector. In one embodiment, a method for use in a surveillance system having a camera, comprises generating a background image of the camera's field of regard, receiving a live video image of the camera's current field of view, wherein the field of view is within the field of regard, and correlating a position of the live video image within the background image. The live video image may be correlated with the background image by displaying a position indicator for the live video image on the background image or may be done by fusing the live video image on the background image in its relative position.

In another embodiment, a night vision surveillance system, comprises a camera having a field of regard, an illuminator capable of producing an illumination beam, a computer capable of generating a background image of the field of regard, receiving a live video image of a current field of view of the camera that is within the field of regard, and correlating a position of the live video image within the background image, wherein the live video image is captured by the camera using the illumination beam.

In another embodiment, a method of surveillance using at least one camera, comprises generating a background image of the camera's field of regard, scanning the field of regard based on target position information corresponding to a position of at least one target in the field of regard, receiving a live video image of the camera's current field of view that includes the at least one target position, wherein the field of view is within the field of regard, and correlating a position of the live video image within the background image.

In another embodiment, a night vision surveillance system, comprises a camera having a field of regard, an infrared (IR) illuminator capable of producing an illumination beam, wherein the illuminator is separated from the camera to create a parallax, and a computer capable of controlling the camera and the illuminator. The system may also include a safety module capable of detecting the presence of objects too close to the illuminator and shutting off the illumination beam.

These illustrative embodiments are mentioned not to limit or define the invention, but to provide examples to aid understanding thereof. Illustrative embodiments are discussed in the Detailed Description, and further description of the invention is provided there. Advantages offered by the various embodiments of this invention may be further understood by examining this specification.

### BRIEF DESCRIPTION OF THE DRAWINGS

These and other features, aspects, and advantages of this invention are better understood when the following Detailed Description is read with reference to the accompanying drawings, wherein:
Figure 1 is a block diagram illustrating a surveillance system according to one embodiment of the present invention;
Figure 2 is a block diagram illustrating a camera unit and an illumination unit of the surveillance system according to one embodiment of the invention;
Figure 3 is an illustrative user interface according to one embodiment of the invention;
Figure 4 illustrates a portion of a user interface of another embodiment of the invention;
Figure 5 is a flow diagram of an illustrative method of night time surveillance according to one embodiment of the invention;
Figure 6 illustrates the change in the illumination beam spot's size according to one embodiment of the invention;
Figure 7 illustrates various exemplary illumination beam spots within the camera's field of regard according to one embodiment of the invention;
Figure 8 is a flow diagram of an illustrative method for generating a background image according to one embodiment of the invention;
Figure 9 illustrates a scanning pattern that may be used in the creation of a background image according to one embodiment of the invention;
Figure 10 illustrates another scanning pattern that may be used in the creation of a background image according to one embodiment of the invention; and
Figure 11 illustrates a safety method according to one embodiment of the invention.

### DETAILED DESCRIPTION

Embodiments of the invention provide systems and methods for night time surveillance. There are multiple embodiments of the present invention. By means of introduction and example, one illustrative embodiment of the present invention provides a night time surveillance system that utilizes an IR laser illuminator with a zoom collimating lens and an imager composed of a video camera and zoom lens. The optical axes of the illuminator and the imager are spatially separated to create a parallax in order to reduce atmospheric backscattering. The illumination beam from the laser illuminator may be shaped to uniformly distribute light over the whole field of view. The focal length of a collimator in the illuminator may be made to change with the focal length of the camera or they can move independently of one another. The system may also include a safety mechanism or circuit that is capable of detecting when objects are too close to the illuminator and can shut down the laser source.

The system may generate a panoramic background image of the field of regard of the camera and correlate this background image with live video images captured by the camera using the IR laser illuminator. The system may display the live video image correlated with the background image to provide the user with a clear indication of where in the field of regard the live video image is positioned. The system may intelligently scan the field of regard in order to capture the live night time video images.

### System Architecture

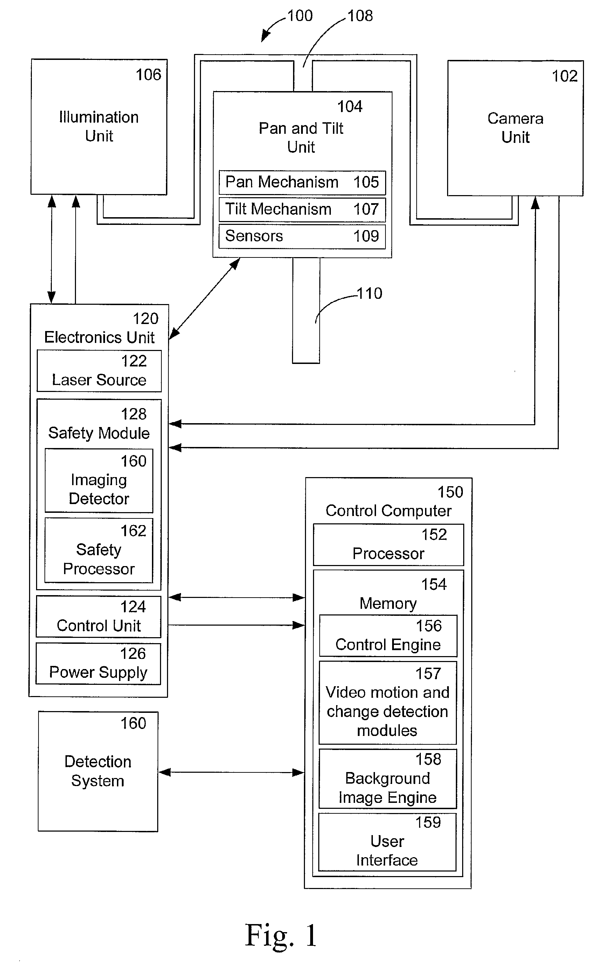

Various systems in accordance with the present invention may be constructed. Referring now to the drawings in which like numerals indicate like elements throughout the several figures, Figure 1 is a block diagram showing an illustrative environment for implementation of one embodiment of the present invention. The system 100 shown in Figure 1 includes a camera unit 102, a pan and tilt unit 104, an illumination unit 106, an electronics unit 120, and a control computer 150. The system 100 can also include a target detection system 160, such as a thermal detection system, radar, or fence system.

The pan and tilt unit 104 can be mounted to a structure 110, such as a pole, a stand, a tripod, or a wall, for example. An adaptor bridge 108 can be coupled to the pan and tilt unit 104 and the adaptor bridge 108 can be connected to and support the camera unit 102 and the illumination unit 106. The pan and tilt unit 104 may include a pan mechanism 105 capable of moving in a horizontal direction and a tilt mechanism 107 capable of moving in a vertical direction. The pan and tilt unit 104 can receive control signals from the electronics board 120 that causes the pan mechanism 105 and the tilt mechanism 107 to move the illumination unit 106 and the camera unit 102 to cover a wide panorama. The pan and tilt unit 104 can also include sensors 109 that provide position signals indicating the position (pan and tilt angles) of the pan and tilt unit 108 and thus the position of the camera unit 102 and the illumination unit 106. In another embodiment, the pan and tilt unit 108 is gyro- stabilized for use on moving or unstable platforms.

In other embodiments, the system 100 may not include a pan and tilt unit and the camera unit 102 and the illumination unit 106 may be fixed. In still other embodiments, the camera unit 102 and the illumination unit 106 may be in different locations and mounted on separate pan and tilt units. In one embodiment, the camera unit 102 and illumination unit 106 are mounted at least 6 meters high.

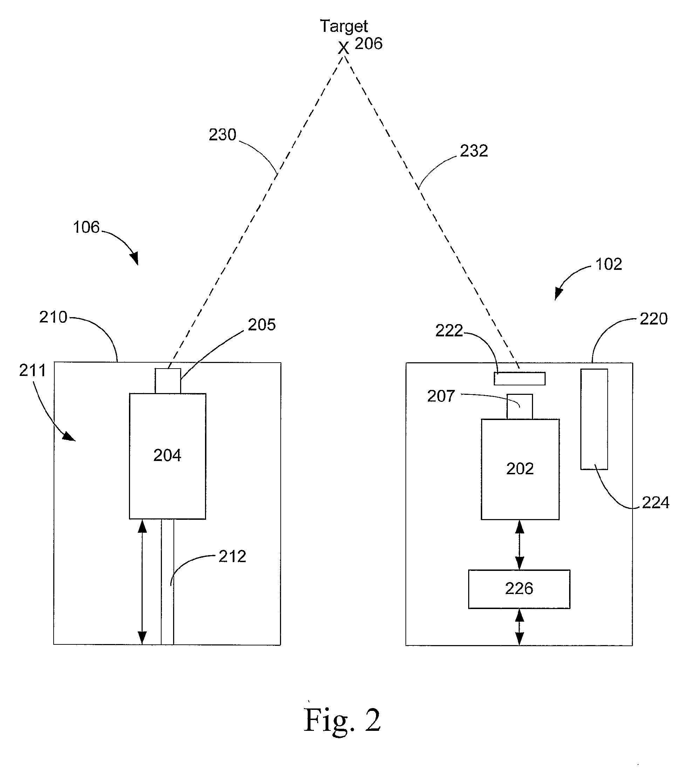

As shown in Figure 2, the illumination unit 106 includes a housing 210 that houses the active illuminator 211, which includes a fiber-optic adapter 212 and a zoom collimator 204. The illuminator 211 also includes a light source, such as a laser source 122 in the electronics unit 120 shown in Figure 1. Other suitable light sources known to those skilled in the art may also be used. The fiber optic adapter 212 receives an IR laser illumination beam from the laser source 122 in the electronics unit 120 (as explained below). In one embodiment, the fiber optic adapter 212 is a circular fiber optic cable. The zoom collimator 204 can contain one or more collimating lenses 205 that operate to focus and control the IR laser illumination beam on a target 206. The zoom collimator 204 can receive control signals, such as zoom, and focus from the electronics unit 102 (as explained below).

The camera unit 102 may include a housing 220 that encloses a camera 202 with zoom lens, camera interface card 226, mechanical bore sight mechanism 224, and spectral filter mechanisms 222. In one embodiment, the camera 202 is a CCD camera from Panasonic Corp. with a Computar lens from CBC Co., Ltd., for example. [0022] The mechanical bore sight mechanism 224 can be used to co-align the optical axis 230 of the IR laser illumination beam and the optical axis 232 of the camera 202 on the target 206. The camera interface 226 can receive control signals, such as zoom, focus, gain, and shutter, from the electronics unit 120 (as explained below) and relay the control signals to the camera 202. The camera interface 226 can also receive video image signals from the camera 202 and transmit the video image signals to the electronics unit 120.

The focal lengths of the camera 202 and the collimator 204 can be locked, meaning that they change in unison, or they can change independently. For example, in one embodiment, the control computer 150 uses the zoom and focus settings of the camera 202 and translates these parameters into zoom and focus settings for the collimator 204 in order for the two fields of view to be the same size. In this way, a change in the zoom and focus settings for the camera 202 will result in a similar change for the collimator 204.

The spectral filter mechanism 222 can be used for capturing video with the camera 202 using IR laser illumination beam at night or other times of zero light or near zero light. The spectral filter mechanism 222 may include at least one narrow bandwidth or cut-off filter and movement mechanism. The narrow bandwidth filter transmits the laser wavelength and rejects other light bands. For example, if a 910 nm laser is used, then a filter with a wavelength band of 900 to 920 nm may be used. In another embodiment, a cut-off filter that transmits light with a wavelength of 900 nm and above and rejects light with wavelengths lower than 900 nm may be used. Using a narrow bandwidth filter enables the system to cope with the entire possible dynamic range of lights in the camera's field of view. For example, with the narrow bandwidth filter the system can view a totally dark area and a street light nearby without being saturated by the strong light. The movement mechanism is used to move the filter in position in front of the camera lens 207 when in nighttime mode or otherwise when using the laser illuminator. In one embodiment, the system 100 is configured to operate as a day time system and a night time system.

In one embodiment, the camera 202 and the collimator 204 are spaced apart in order to create parallax that reduces backscattering originating from atmospheric aerosols at short ranges considered a major cause of noise with IR illumination night time systems. The noise due to backscattering in short range is stronger than noise due to backscattering at longer distances. By separating the illuminator from the camera to create a parallax, the close range backscattering may be avoided or reduced. For example, the camera 202 and the collimator 204 can be separated by 0.5 meters, which allows capturing images having little or no backscattering with the camera 202 using the laser illumination beam 230 of objects 20 meters away from the camera 202 and collimator 204.

In one embodiment, the camera unit 102 and illumination unit 106 are mounted on a single pole or tripod and the camera unit 102 and illumination unit 106 vertically with respect to each other. For example, the illumination unit 106 may be mounted on top of the camera unit 102. In another embodiment, the illumination unit 106 and camera unit 102 are mounted on separate poles or tripods. This way, the atmospheric backscattering is totally or almost totally eliminated. In this embodiment, the illumination unit 106 and camera unit 102 each may have a pan and tilt unit and these pan and tilt units may be slaved to each other. In still another embodiment, image processing techniques can be used by the control computer to stretch contrasts of the image digitally in order to reduce backscattering.

The illuminator 211 using a laser light source may be capable of brightness levels enabling an operation range of 1000 meters and more. The collimator 204 can allow for the laser illumination beam's divergence to be easily changed in correspondence to the camera's field of view. Most conventional night-time surveillance systems use LEDs or bulb based illuminators. Such illuminators are generally very limited in range (up to 150-20Om) due to their limited brightness and cannot afford the synchronous change of the beam's divergence angle with the camera's field of view.

In one embodiment, the illumination laser beam is shaped so that the light of the laser beam is spread out uniformly across the laser beam. For example, the fiber optic adapter 212 can create a uniform distribution of light across the illumination beam. The fiber optics adapter 212 may also act to create an illumination beam that is circular in shape and has a sharp drop off in intensity at the outer radius of the illumination beam. The uniform spread of light and sharp edges of the illumination beam are in contrast to the uneven spread of light and soft edges of an illumination beam typically created by an LED or a bulb. The size of the illumination beam may be determined by controlling the focal length of the collimator lens 205.

Returning to Figure 1, the video image data captured by the camera 202 is sent from the camera unit 102 to the electronics unit 120. The electronics unit 120 then transfers the video image data to the control computer 150. The control computer 150 can contain a processor 152 coupled to a computer-readable medium, such as memory 154. Processor 152 can be any of a number of computer processors, as described below, such as processors from Intel Corporation of Santa Clara, California and Motorola Corporation of Schaumburg, Illinois. Such processors may include a microprocessor, an ASIC, and state machines. Such processors include, or may be in communication with computer-readable media, which stores program code or instructions that, when executed by the processor, cause the processor to perform actions. Embodiments of computer-readable media include, but are not limited to, an electronic, optical, magnetic, or other storage or transmission device capable of providing a processor with computer-readable instructions. Other examples of suitable media include, but are not limited to, a floppy disk, CD-ROM, DVD, magnetic disk, memory chip, ROM, RAM, an ASIC, a configured processor, optical media, magnetic tape media, or any other suitable medium from which a computer processor can read instructions. Also, various other forms of computer-readable media may transmit or carry program code or instructions to a computer, including a router, private or public network, or other transmission device or channel, both wired and wireless. The instructions may comprise program code from any computer- programming language, including, for example, C, C++, C#, Visual Basic, Java, Python, Perl, and JavaScript.

The control computer 150 may operate on any operating system, such as Microsoft(R) Windows(R) or Linux. Examples of control computers are personal computers, server devices, digital assistants, personal digital assistants, mobile phones, digital tablets, laptop computers, Internet appliances, and other processor- based devices. In general, the control computer 150 may be any suitable type of processor-based platform that interacts with one or more application programs. The control computer 150 may be connected to a network (not shown), such as the Internet and may be directly connected to the electronics unit 120 and the detection system 160 through a wired or wireless connection or may be connected to the electronics unit 120 and the detection system 160 through a network connection, wired or wireless. The control computer may include input and output devices, such as a keyboard, a mouse, a display, and a storage device.

Program code running on the control computer and stored in memory 154 may include a control engine 156, a background image engine 158, video motion and change detection modules 157, and a user interface application 159. The control engine 156 can calculate and send control signals to the electronics unit 120 that can be used to control the laser source 122, collimator 204, and the camera 202. The background image engine 158 can receive image data from the camera unit 102 to generate a background image, and correlate a live video image with a background image. The video change and motion detection modules 157 include a motion detection algorithm that can detect and isolate moving objects in the camera field of view and a change detection algorithm that can identify new or missing objects in a given field of view, such as, for example, left objects in an airport and missing paintings in a museum.

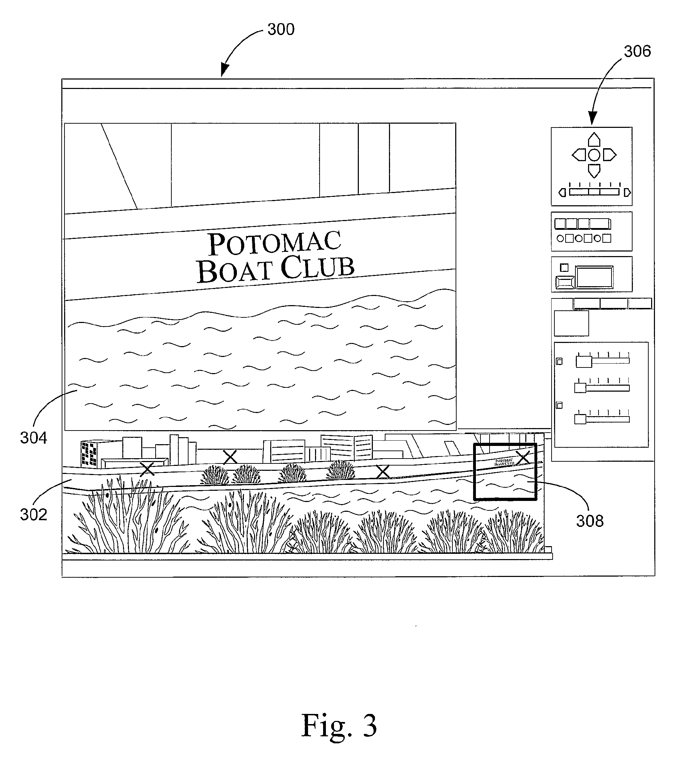

The user interface application 159 presents a user interface on a display device that allows a user to interact with the system. Figure 3 illustrates an example of a user interface 300.

The electronics unit 120 may include a laser source 122, a safety module 128, and a control unit 124. The laser source 122 can transmit a laser beam over fiber optics 134 to the illumination unit 106. The laser source 122 may be a continuous wave laser. For example, the laser source 122 may be a diode laser model HLU10F600-808 from LIMO GmbH of Germany.

The safety module 128 can function to shut off the laser source 122 in the event an object gets too close to the laser illumination beam. The safety module 128 includes a safety processor 162 and an imaging detector 160 that is collinear to the laser beam from the laser source 122. The imaging detector 160 is capable of detecting beam reflection (or backscatter image) from objects going into the laser beam and sending signals to the safety processor 162. The safety processor 162 can analyze the backscattering radiation profile received from the detector 160. This allows the safety module 128 to detect when an object is too close to the laser beam. Upon detection of an object that is too close to the laser beam, the safety module 128 can send control signals to the laser source 122 to shut off the laser beam.

In one embodiment, the safety processor 162 is an integrated circuit, such as, for example, a field-programmable gate array, and is located in the electronics unit 120. The safety processor 162 may be operated in software located in the control computer 150. By implementing the safety processor 162 in the electronics unit it may be more reliable and have a shorter loop as compared with a software implementation in the control computer 150. In one embodiment, the safety module 128 is capable of shutting down the laser source 122 within a video field time, which is approximately 17 msec. An object's exposure to the laser radiation is thus limited to that period. Eye damage caused by laser radiation is dependent on the exposure duration and the short shut down time may act to reduce such damage. In this manner, the safety module 128 can work to shut off the laser source when human objects get too close to the laser, but does not hamper the system 100 with needless shut downs.

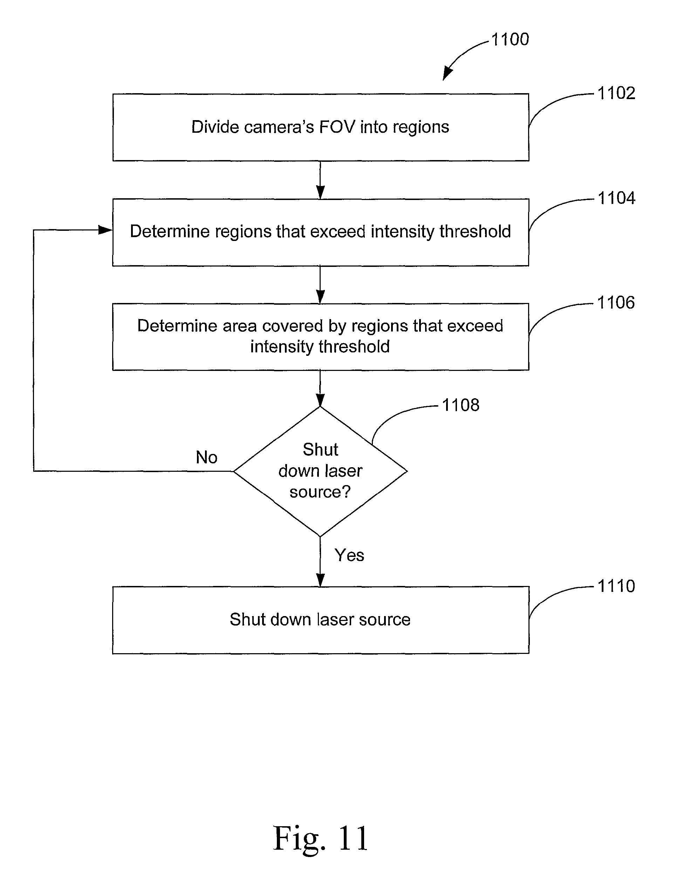

Figure 11 illustrates a safety method 1100 for shutting down the laser source based on detection of an object according to one embodiment of the invention. In block 1102 the safety processor 162 may divide the camera's field of view into multiple regions. In one embodiment, the safety processor 162 divides the camera's 202 field of view into small squares.

In block 1104, the safety processor 162 then determines regions that exceed a safety threshold. For example, the safety processor can, for each region or square, count the number of pixels whose intensity crosses a given threshold. If this number is higher than a specified figure, the given region is considered to be above the threshold. In block 1106, the area covered by the regions that exceed the intensity threshold is determined. For example, the safety processor 162 can determine the size and shape of the area covered by squares that have crossed the intensity threshold. In block 1108, the safety processor 162 uses this area information to determine whether to shut down the laser source 122. For example, the size and the shape of the object can be used to determine whether the object that has been detected is likely a human that warrants shutting down the laser source or is another object, such as an insect or bird, that would not warrant shutting down the laser source.

In block 1108, if the safety processor 162 determines that the laser source should not be shut down, then the method 1100 continues at block 1104. If the safety processor 162 determines that the laser source 122 should be shut down, then the safety module 128 shuts down the laser source 122 at block 1110.

The safety module 128 is also capable of reviving the illuminator automatically without user intervention. For example, the safety module 128 may gradually increase the intensity of the laser and continually check for objects too close to the illuminator that pose a potential eye safety threat. If an object is detected that warrants shutting the laser down, then the laser intensity is again reduced to zero. Otherwise the intensity of the laser gradually increases until it is at the desired strength. For example, at a shut-down event, the laser intensity goes down to 0, but immediately after gradually increases to a small value, such as ten percent of its maximum value. In the next field time, the safety processor 162 can determine if there is still a possible eye safety threat at this reduced intensity. If there is still a threat, the intensity is automatically lowered to a smaller value. If there is not a threat, then the intensity goes up in the next field to a higher value. This process continues so that the maximal eye safe laser intensity is implemented in each point in time. In this manner, the surveillance job (with some degraded performance) can continue even after a safety shutdown. This also allows the system to automatically bring itself back to night time surveillance mode without a manual reset or operator interaction, which is important if the system is unmanned.

In one embodiment, the safety module 128 is implemented in such a manner that the laser can be classified as a class 1 laser. Classifying the laser as class 1 eliminates the requirement that a laser safety officer be present when the laser is in use.

Returning again to Figure 1, the control unit 124 can receive control signals from the control computer 150 and transmit control signals to the laser source 122, the illumination unit 106, the pan and tilt unit 104, and the camera unit 102. The laser control signals can control the intensity of the laser at the laser source 122. The illumination unit control signals can be used to control the collimator 204, such as to control the zoom of the laser illumination beam. The pan and tilt unit control signals can control the movement of the pan and tilt unit 104. The camera unit control signals can be used to control the camera 202, such as zoom, focus, gain, shutter, and other camera controls.

The electronics unit 120 can also contain a power supply unit 126 that can receive power from the control computer or other power source and provide power to the components in the electronics unit 120 as well as the illumination unit 106, pan and tilt unit 104, and camera unit 102. The power supply circuit 126 may include a transformer to transform the received power to the power needed by various components. The electronic unit 130 may also contain a cooling unit (not shown) to cool the components of the unit 130.

### User Interface

Figure 3 illustrates one embodiment of the user interface 300 generated by the control computer 150. The user interface can include a background image 302, a live video image 304, and controls 306. In the embodiment shown in Figure 3, the background image 302 is a panoramic image of the field of regard of the camera 202 and is displayed in color. The live video image 304 is the current field of view of the camera 202 as captured by the camera 202 using the laser illumination beam 230. The position of the live video image 304 is correlated with the background image 302 in this embodiment by an indicator box 308 on the background image 302. The background image 302 with the indicator box 308 provides the user with immediate orientation as to the area currently being viewed. After achieving this orientation, the user may zoom in to watch the inspected area in more detail.

The controls 306 can perform a variety of functions, such as controlling movement of the pan and tilt unit 108, controlling the camera 202 and collimator 204, and controlling the laser source 122. For example, a user can through the controls 306 move the field of view of the camera 202 by controlling the pan and tilt unit 108. The camera 202 settings, such as focus, gain, and shutter, can be controlled by a user through the controls 306. The filter 222 used by the camera 202 and stability setting of the camera 202 can also be controlled by a user through the controls 306. Illuminator settings for the collimator 204, such as zoom and focus can be controlled via the controls 306. The controls 306 can also allow a user to turn the laser illumination beam on and control the intensity and size of the laser illumination beam. The controls 306 may allow the user to lock the camera and illuminator focal lengths so they move in unison.

A user through the controls 306 may generate and set the size of the background image 302. The controls 306 also provide an interface for a user to set points of interest or targets and paths within the panoramic background image 302 and navigate between targets. The control computer 150 may also receive information from other detection systems and display this information. In one embodiment, a thermal imaging system is used and the position of the thermal imager is shown on the background image with an indicator similar to box 308. The thermal imager indicator box may be larger than box 308 and a different color. An image (not shown) from the thermal imager may also be displayed in the user interface to the user.

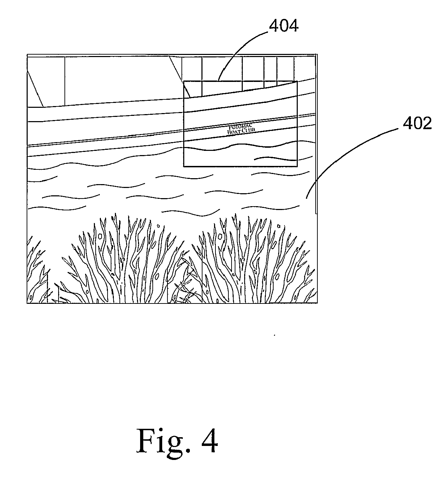

Figure 4 illustrates an alternative embodiment of the image portion of the user interface. In this embodiment, a portion of the panoramic background image 402 is displayed with a live video image 404 displayed or fused within the background image 402. The area 404 is illuminated by the IR illuminator and imaged by the camera. The live video image 404 generated by the camera is automatically stitched to the pre-prepared fixed image 402 of the field of regard retrieved from the control computer's 150 memory. The composited image is presented to the user. In this embodiment, only section 404 is a live image, which is captured in real-time. The composited image gives the user immediate orientation as to the area he is currently viewing. After achieving this orientation the user may zoom in to watch the inspected area in more detail. When zooming in the live video image 404 is optically magnified and the synthetic area 402 is digitally magnified in synchrony with the optics so that the entire composited image behaves as a single image originating from a single real imager.

In another embodiment, the live video image is fixed in the center or in any other predetermined position of the background image even if the system is panning or tilting. When the user zooms in, the live video image is optically magnified and the background image is digitally magnified in synchrony with the optics so that the entire background and live video image behave as a single image originating from a single real imager. In still another embodiment, the background image is fixed while the live video image portion changes its position in the background image frame as the camera is moving. This option may be useful when the surveillance system is required to automatically track a specific path in the camera's field of regard, a "virtual patrol". Other ways of correlating the position of the live video images with the background image may be used.

### Methods

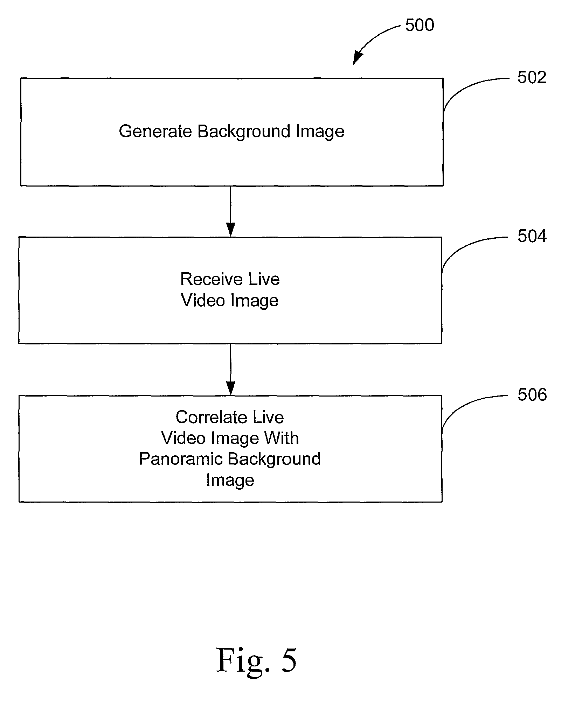

Various methods in accordance with embodiments of the present invention may be earned out. Figure 5 illustrates an illustrative method 500 for surveillance that may be implemented by the system 100 shown in Figures 1 and 2. This illustrative method is provided by way of example, as there are a variety of ways to carry out methods according to the present invention. The method 500 shown in Figure 5 can be executed or otherwise performed by one or a combination of various systems. The system shown in Figures 1 and 2 and described above is used for illustration purposes.

Method 500 begins at block 502 with the generation of a background image. The background image may be a panoramic image that contains all or a portion of the field of regard of the camera 202 and is illustrated in Figure 3 by image 302. In one embodiment, the background image is a color image created in full daylight. A background image can also be created using an IR filter and then correlated to the color background image. An IR background image may provide for better correlation with a live video image captured using IR illumination.

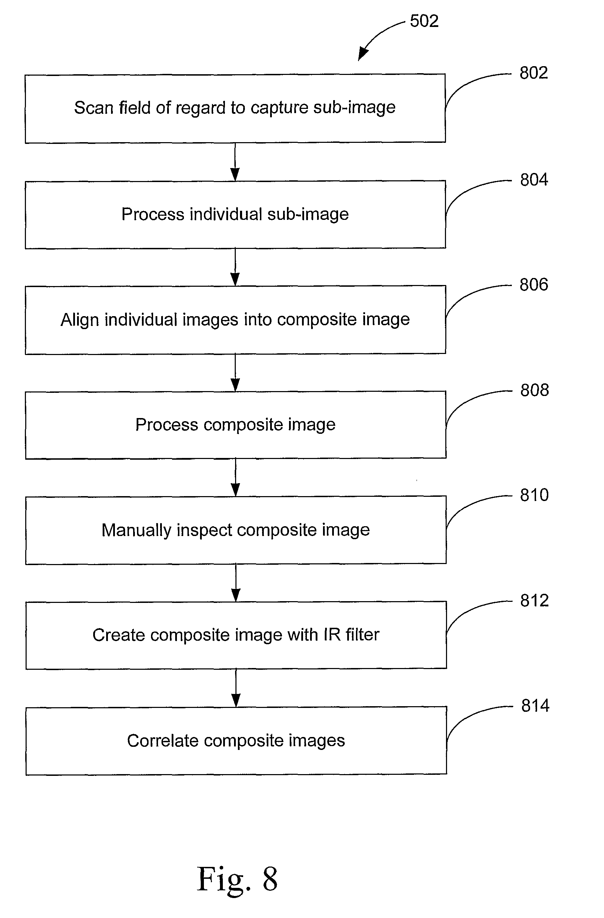

In one embodiment, the background image engine 158 generates the background image by controlling the camera 202 to capture multiple images from its field of regard and then correlating those images into a panoramic image. Figure 8 below provides more detail on an illustrative method for the generation of a background image.

In block 504, a live video image is received. In one embodiment, the live video image is captured by the camera 202 using laser illumination from the illuminator 211. The live video image can be the current field of view of the camera 202 and is illustrated, for example, in Figure 3 by image 304 and in Figure 4 by image 404. As explained above, the focal lengths of the collimator 204 can be slaved to the field of view of the camera 202. The user can also separately control the camera 202, the collimator 204, and the laser source 122.

In block 506, the position of the live video image is correlated with the background image. The momentary field of view of the camera 202 is generally smaller than the camera's 202 field of regard. It is therefore possible that this current captured live image does not comprise any environmental visual clue recognizable to the user. It is thus quite probable that the user will lose orientation in space and will not know where the camera is aiming and where the live image is located in the entire field of regard. This necessitates correlating the live video image with the background image so that a user is provided with orientation for the live video image. In one embodiment, a box is provided in the background image to illustrate to the user where in the field of regard the live video image is positioned. This embodiment is shown, for example, in Figure 3 by box 308. In another embodiment, the live video image may be displayed at its location within the background image. This embodiment is shown, for example, in Figure 4.

Various methods may be used to correlate the live video image of the night vision camera with the background image of the camera's field of regard. In one embodiment, this correlation is an automatic real time process.

In one method, the laser illumination beam, as well as the bore sighted camera, has a "homing position" whose direction is known to the control computer 150. For example, in one embodiment, the pan and tilt unit 104 has a homing capability, that is a given pan and tilt position is defined as zero position. Using this zero or homing position the control computer 150 can calculate the instantaneous position of the field of view using consecutive frame-to-frame matching calculations. Knowing the field of view direction, the live video image can be roughly correlated to the background image by the control computer 150. In one embodiment, pattern- matching techniques (as described below) are then used to provide a more accurate positional correlation between the live video image and the background image. [0055] Another method uses pattern-matching methods to align and correlate the live video image into its right location in the background image. In one embodiment, the pattern recognition and matching is done using a background image generated using an IR filter. A precalculated correlation between the IR background image and colored background image is then used to correlate the live video image to the background image. In one embodiment, two background images are correlated to each other - a colored daytime background image used for display on a user interface and the IR background image (taken at daytime using an IR filter or taken at night time using the laser illumination) used for block/feature matching. A colored background image can be used for matching as well but this process may be less successful than with the IR background image.

In yet another method, field of view direction is calculated by continuously reading pan, tilt and zoom sensors (such as, for example, potentiometers or encoders) to provide pan and tilt angles and zoom settings. The pan and tilt sensors can be, for example, sensors 109 in the pan and tilt unit 104. The zoom sensors can be associated with the camera 202 and/or the collimator 204. These sensors can send position information (pan and tilt angles and zoom settings) to the control computer 160 for the current field of view. The control computer 150 can calculate the approximate position of current filed of view (the live video image) in the field of regard (the background image) based on this position information. In one embodiment, pattern-matching techniques (as described above) are then used to provide a more accurate positional correlation between the live video image and the background image.

Another method utilizes an IR sensitive position sensor. The IR position sensor may be mounted in a fixed position so that its field of view covers the entire camera's field of regard. The position sensor may serve multiple illuminators. The sensor may automatically detect the illuminator spot, extract its diameter and transmit its direction and size to the control computer 150. Knowing the position sensor's location and pose as well as the surveillance system's location the control computer 150 can calculate the location of the instantaneous laser spot on the background image.

In one embodiment of the present invention more than one of the above- mentioned methods may be used to correlate the live video image to the background image. Depending on the requirements of the particular system and a user's needs and budget various combinations of the above methods may be used. For example, in order to achieve maximum accuracy in the location of the live video image, the pan, tilt and zoom sensors may be first read for a crude estimate of the live video image position and then video features matching may then be performed for a fine orientation adjustment.

### Scanning the Field of Regard

Various methods may be used to overcome the long scanning time of the field of regard by the camera and the "revisit time" (time period between subsequent visits of the scanning system) for a given point in the field of regard. A long revisit time may be derived from the limitation on the illuminator's beam divergence angle in certain embodiments.

One method is the prior definition of areas of interest, such as, areas, paths, and points of interest, in the field of regard or virtual patrol. In one embodiment, the user may identify the areas of interest or targets through interaction with the user interface, such as, for example, using the controls 306 as illustrated in Figure 3. The control computer 150 may then store these points and control the camera to capture live video images of these areas of interest more frequently than the rest of its field of regard or according to a user defined path. For example, the control computer 150 may control the camera and IR illumination beam so that only the camera's zoom and focus (if required) parameters are changed while the camera scans virtually straight surveillance paths with the optimal image resolution for each segment of the viewed path.

In one embodiment, a virtual patrol process may require the control computer 150 to specify all parameters, including pan and tilt angles and lens zoom (and focus, if required) values dynamically along the planned virtual patrol. A user may specify the points of interest and/or path of interest by clicking on points in the background image 302 of the user interface 300, for example. This can be done by the user at setup or initialization of the system. Once a virtual path or patrol is specified the system can automatically follow the designated path or patrol. [0062] The control computer 150 can correlate the user's selections to the camera, illumination, and pan and tilt parameters necessary to capture images from the specified points or along the specified path. For example, in Figure 3 the "X"s indicate predetermined areas of interest or targets set by a user. The control computer 150 can correlate the address information of the targets, Xs, in the background image with position information in the field of regard. The control computer can, for example, control the camera using the laser illumination beam to capture images from left to right at each target. Based on input from a user, the control computer 150 may control the camera to perform night-time "virtual patrols" along pre-determined paths in the camera's field of regard as well as other sophisticated scanning patterns. Another parameter that can be dynamically changed throughout the scan is the illuminator's intensity that should be reduced when the system is engaged at close proximity ranges in order to secure eye safety for casual passers by and/or to avoid image saturation.

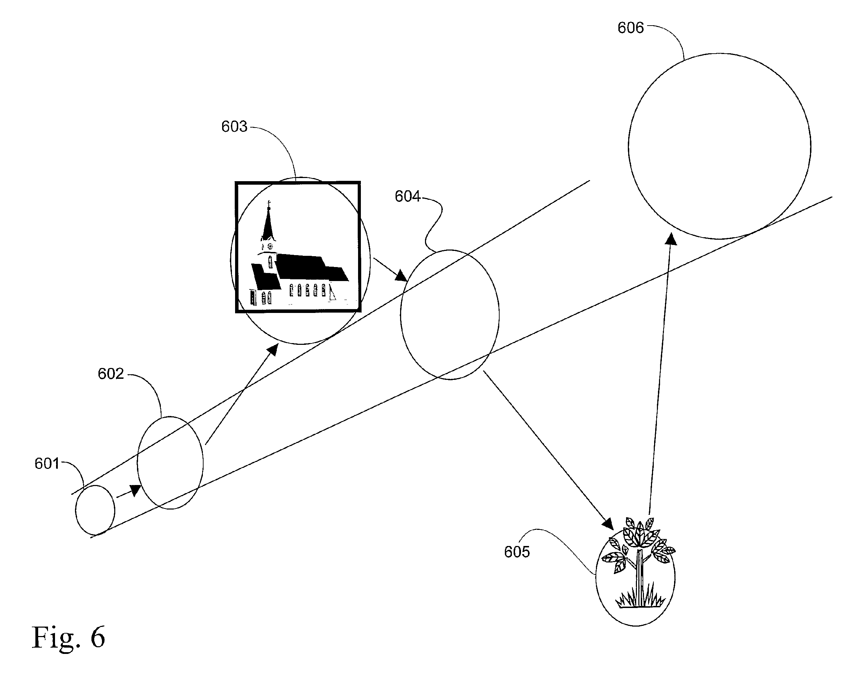

Efficient implementation of such a virtual patrol requires synchronous change of the viewing camera's filed of view and the IR illuminator's divergence angle. By synchronizing the camera's field of view and the IR illuminator's divergence angle the focusing of the entire illuminator beam intensity is enabled onto the relevant portions of the field of regard. An illustration is shown in Figure 6. The illumination beam spots, designated by through 605, bounding the bore sighted camera's field of view change dynamically and in synchrony with the camera lens zoom mechanism to effectively view the various important points in the field of regard.

A detection system may be included in the system to allow for intelligent scanning of the field of regard, such as the detection system 160 shown in Figure 1. For example, a wide sector detection system like a scanning thermal imager or antipersonnel radar may be used. A security system with close proximity detection sensors (independently deployed or mounted on a fence) may also be used. The detection system 160 may send the detected location to the control computer 150. The control computer can then direct the camera field of view and illumination beam to capture live video images from the area of interest. [0065] For example, the detection system 160 may be an alarm system with a series of sensor located in the field of regard. The location of each sensor in the field of regard is established at setup of the system. The control computer 150 may receive an alarm signal from a sensor, which may cause the field of view to point automatically to the sensor's direction and the lens zoom value to encompass the estimated location of the potential threat. The ability for the field of view to change to the exact location of the alarm is governed by the sensor's capabilities. For example, if a fence sensor provides a location along 50 meters of fence line, at high zoom, the system may need to pan to see the actual target.

Another method of scanning the field of regard is based on motion and/or changes detection in the field of regard and consecutive exploration of areas where such activities (moving objects, new objects added to the scene, objects removed from the scene) are detected. Moving, added or removed objects may be automatically detected by the video motion and change detection modules 157 of the control computer 150 via image processing correlation and matching of the entire field of regard's mosaics images created in subsequent scans. With the automatic detection of areas of interest, the control computer 150 can control the camera to spend more time capturing live video images from these areas. The revisit time of such points of interest will be thus significantly reduced.

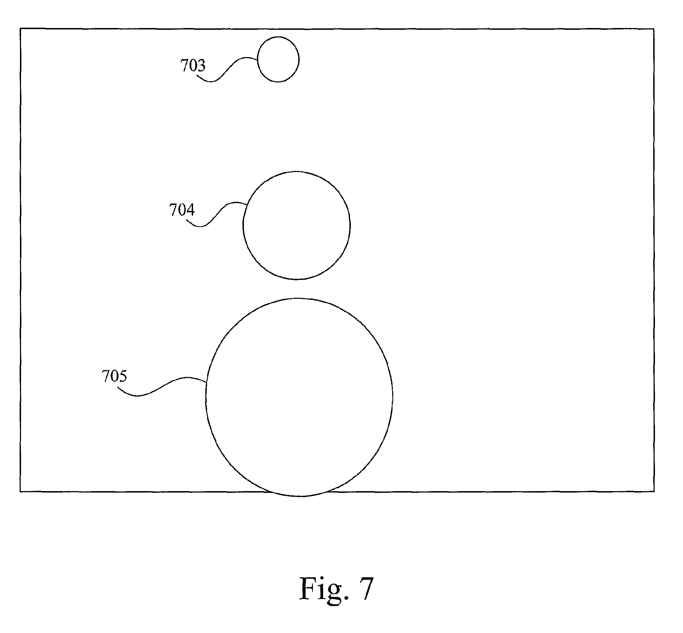

Yet another method to reduce the scanning time of the field of regard relates to the fact that each point in the camera's field of regard, specified by the camera's pan and tilt angles, can be assigned a given range to the camera. The illumination beam's intensity is (in a first approximation) inversely proportional to the squared range. The beam's divergence angle and the derived camera's field of view (bounded rectangle) may thus dynamically change during the scanning process that in areas nearer to the camera the illumination beam is expanded proportionally. This is shown schematically in Figure 7. Circle 701 is the illumination beam in an area close to the camera. Circle 702 represents the beam at a further distance and circle 703 relates to the most distant area in the field of regard still enabling a useful night image. The control computer 150 may also automatically adjust the beam divergence angle and the derived camera's field of view by measuring the average intensity or content information in a given frame, which can reduce the scanning time of the field of regard.

During a scan of the camera's field of regard certain areas may be illuminated by other, artificial or natural, light sources. When the system scans these areas the control computer 150 may switch off the illumination beam and camera's field of view moved to its highest possible value. Any one or combination of these methods may be used by the system 100 to implement the scanning of the field of regard.

### Generating a Background Image

Figure 8 shows an illustrative method 502 for generating a background image of the field of regard. If the system has multiple cameras, then a background image for each camera can be generated. The background image may be generated by the background image engine 158 of the control computer 150.

At block 802, sub-images each corresponding to a fraction of the camera's field of regard are captured. These sub-images may be captured by the camera 202 sequentially scanning the field of regard. The field of regard sub-images are preferably captured with the camera settings on maximum magnification and at full daylight to achieve the highest possible resolution and quality of the generated sub-image. The field of regard image may also be captured using lower resolution options. For example, in one embodiment a single wide field of view image is captured and serves as the background image representing the camera's field of regard. If the camera is analog, the captured sub-images are converted to digital images. The captured sub-images may be stored in memory 154 of the control computer 150. Each sub-image may have position information, such as pan and tilt values, and zoom information associated with it.

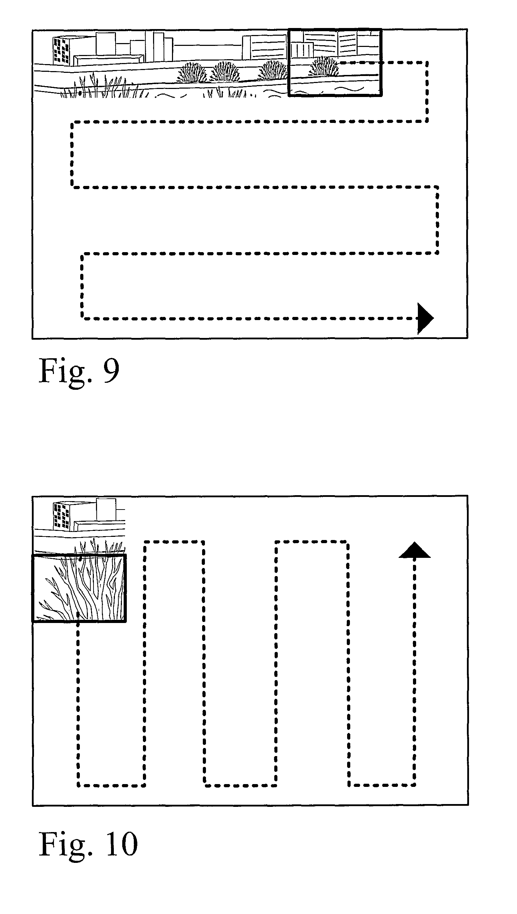

In one embodiment, the scan process is performed so that there is some overlap (typically 1/3 of the frame size) between consecutive sub-image frames. As illustrated in Figure 9, the first sequential scan may, for example, be produced through multiple consecutive vertical slices. Various scan patterns may be used to capture multiple sub-images at each location in the field of regard. If, for example, the initial scan is performed using a vertical scan pattern, the second one can use a horizontal pattern, as illustrated in Figure 10, or any other pattern that consecutively covers the field of regard. A better overall resolution of the field of regard and better colors adjustment between consecutive frames (elimination of border phenomena) may be achieved using multiple scan patterns. The number of patterns and specification of scan patterns may be adjusted to the specific surveillance system requirements, time limitations, other resources, and needs of the users

At block 804, the individual sub-images are processed. In one embodiment, the individual sub-images are processed to remove moving objects from the sub-images. For example, moving objects, such as people, cars or birds, may be captured in a single sub-image or just a few sub-images of the multiple scans. Moving objects may be eliminated by comparing pixel values for the pixels in each sub-image captured in different scans. A given pixel may show a "background value" most of the time while covered with the moving object only in a single point in time. Using a "scan average" pixel value may also reduce spherical or other lens distortion that could cause a considerable distortion of the entire background image if just a single scan had been used.

Referring back to Figure 8, having scanned the area, at block 806 the background image engine 158 aligns the consecutive sub-image frames to produce a composite image of the camera's field of regard. The methods described above for correlating the live image with the background image may also be used to align the captured sub-images into a composite background image. For example, pan and tilt values from the sensors 109 on the pan and tilt unit 104 and zoom values from a zoom sensor associated with the camera 202 may be associated with each sub-image. These pan, tilt, and zoom values can be used to position each sub-image in the composite background image. The system may include an IR position sensor that may be used to determine the position of each sub-image in the composite background image.

In another embodiment, image processing methods, such as block matching and optical flow techniques, can also be used to align the captured sub- images into a composite image. Any one or combination of these and other suitable methods may be used to generate the composite background image from multiple captured sub-images. For example, pan, tilt and zoom values may first be used to roughly place the sub-images in the right position and then image processing techniques may be used to further refine the composite image.

In block 808, the composite image is further processed. For example, color correction and brightness correction can be performed on the composite image to provide for uniform color and brightness over the composite image. The lens distortion removal described above may also be performed on the composite image.

In block 810, a manual inspection of the composite background image may be performed in order to correct geometrical or other errors created by the automatic process. The manual inspection is performed by a user interacting with the user interface. In some embodiments, this manual inspection is not performed.

In block 812, another composite image is generated by scanning the field of regard and capturing images with the camera using an IR filter. The IR filter may have a spectral transmission similar to the illuminator's spectrum. Alternatively, this process can be done at night when the illuminator is on with or without the IR filter. A generated field of regard IR composite image may be required when the live video is correlated to the background image by means of features matching. Correlation between the live video night image and the IR background image is expected to be better than the correlation with the wide spectrum background image due to the fact that the light intensity reflected from objects and terrain is wavelength dependent. IR contrasts may thus be significantly different from the visible wide-band ones. The background IR image can also be correlated to the live video image and thus used for presentation of the background image. In some embodiments, a composite IR image is not generated.

In block 814, the color background image and the IR background image are correlated. This correlation may be performed automatically, manually or both.

The background image preparation method as described above may be preformed only once, at installation, or whenever major changes occur in the camera's field of regard area. It goes without saying that whenever the camera is moved to a new position the process should be repeated. The procedure can be done during daytime or during night. In the last case the illuminator should be switched on for the IR image generation. The procedure may also be repeated regularly for dynamic environments like warehouses, parking lots and the like.

An alternative method to produce the field of regard background image relies on creating a computerized three-dimensional model of the area in question. Such a model may be produced combining satellite images of the area with topographical terrain and building architectural data. A two-dimensional satellite image is converted into a three-dimensional model with realistic textures. Having a three-dimensional model and knowing the surveillance camera's installation positions enable the creation of each camera's field of regard background image by rendering the three-dimensional model onto the viewpoint of the camera. The rendering process, which is basically imaging a three-dimensional model onto a virtual camera focal plane may be implemented using a standard personal computer equipped with one of the latest graphical cards and a commercial software graphical render engine.

While the latter method allows for an automatic generation of field of view images from every point in the given area, the former method produces images which are much more accurate geometrically and in texture.

### General

The foregoing description of the embodiments, including preferred embodiments, of the invention has been presented only for the purpose of illustration and description and is not intended to be exhaustive or to limit the invention to the precise forms disclosed. Numerous modifications and adaptations thereof will be apparent to those skilled in the art without departing from scope of the this invention.

### FEATURES

AA. A method for use in a surveillance system having a camera, comprising:
   generating a background image of the camera's field of regard; receiving a live video image of the camera's current field of view, wherein the field of view is within the field of regard; and correlating a position of the live video image within the background image.
AB. The method of feature AA, wherein the live video image is captured by the camera at night using an infrared (IR) illuminator.
AC. The method of feature AB wherein the IR illuminator is a laser.
AD. The method of feature AA, further comprising displaying the live video image and the background image such that the position of the live video image is correlated within the background image.
AE. The method of feature AD, wherein the live video image is displayed separately from the background image and the background image includes an indicator of the position of the live video image.
AF. The method of feature AD, wherein the live video image is displayed within the background image.
AG. The method of feature AF, wherein the live video image is displayed in the center of the background image.
AH. The method of feature AF, wherein a displayed position of the live video image within the background image changes based on a change of the current field of view of the camera.
AI. The method of feature AA, wherein generating the background image comprises: scanning the field of regard to capture a plurality of background sub-images; and aligning the sub-images into a composite image.
AJ. The method of feature AI, further comprising processing the sub-images by removing moving objects.
AK. The method of feature AJ, wherein the composite image is processed to color correct and brightness correct the composite image.
AL. The method of feature AI, wherein scanning the field of regarding comprises scanning the field of regard a plurality of times in a plurality of different patterns.
AM. The method of feature AI , further comprising : generating an IR background image; and correlating the IR background image with the background image.
AN. The method of feature AA, wherein assembling the sub-images into a composite image comprises receiving position information and using image processing techniques.
AO. The method of feature AA, wherein correlating the position of live video image within the background image comprises receiving position information and using image processing techniques.
AP. A night vision surveillance system, comprising: a camera having a field of regard; an illuminator capable of producing an illumination beam; a computer capable of generating a background image of the field of regard, receiving a live video image of a current field of view of the camera that is within the field of regard, and correlating a position of the live video image within the background image, wherein the live video image is captured by the camera using the illumination beam.
AQ. The system of feature AP, wherein the illuminator is an infrared (IR) laser illuminator and the illumination beam is an IR laser illumination beam.
AR. The system of feature AP, further comprising a pan and tilt unit supporting the camera and illuminator and capable of moving the camera and illuminator, wherein the pan and tilt unit is controlled by the computer.
AS. The system of feature AP, wherein the camera and the illuminator are located in different locations.
AT. The system of feature AP, wherein a focal length of the camera and a focal length of the illuminator are capable of moving in unison.
AU. The system of feature AP, further comprising a display capable of displaying the live video image and the background image with the position of the live video image correlated within the background image.
AV. The system of feature AP, wherein the computer generates the background image by scanning the field of regard to capture a plurality of background sub-images and aligning the sub-images into a composite image.
AW. The system of feature AP, further comprising a detection system capable of providing detected targets location information to the computer.
AX. The system of feature AP, further comprising a plurality of cameras. 2AY. A method of surveillance using at least one camera, comprising: generating a background image of the camera's field of regard; scanning the field of regard based on based on areas of interest (AOI) position information corresponding to a position of at least one AOI in the field of regard; receiving a live video image of the camera's current field of view covering the at least one AOI, wherein the field of view is within the field of regard; and correlating a position of the live video image within the background image.
AZ. The method of feature AY, wherein the AOI position information is received from a user specifying an area of interest.
BA. The method of feature AY, wherein the AOI position information corresponds to a predetermined scan path for the camera.
BB. The method of feature BA, wherein settings on the camera are automatically changed to optimize image resolution along the scan path.
BC. The method of feature BA, wherein the predetermined scan path is managed through a user interface with direct user input.
BD. The method of feature BC, wherein the user input is at least one of an area, a path, or points of interest within the field of regard.
BE. The method of feature AY, wherein the AOI position information is received from a detection system.
BF. The method of feature AY, wherein the AOI position information is generated by image processing methods.
3BG. The method of feature AY, wherein the live video image is captured by the camera at night using an infrared (IR) laser illuminator.
BH. The method of feature BG, wherein settings of the illuminator are automatically changed based on the proximity of targets in the current filed of view to the illuminator.
BI. The method of feature BG, further comprising automatically adjusting a beam divergence angle of the illuminator and the current field of view based at least in part on an average intensity of the current field of view.
BJ. The method of feature BG, further comprising automatically adjusting a beam divergence angle of the illuminator and the current field of view based at least in part on content information in the current field of view.
BK. The method of feature BG, wherein the illuminator is switched off if the current field of view is illuminated by a light source.
BL. A night vision surveillance system, comprising: a camera having a field of regard; an infrared (IR) illuminator capable of producing an illumination beam, wherein the illuminator is separated from the camera to create a parallax; and a computer capable of controlling the camera and the illuminator.
BM. The system of feature BL, wherein the illuminator is an IR laser illuminator and the illumination beam is an IR laser illumination beam.
BN. The system of feature BL, further comprising a pan and tilt unit supporting the camera and illuminator and capable of moving the camera and illuminator, wherein the pan and tilt unit is controlled by the computer.
BO. The system of feature BL, wherein the camera and the illuminator are located in different locations and mounted on separate pan and tilt units.
4BP. The system of feature BL, wherein a focal length of the camera and a focal length of the illuminator are capable of moving in unison.
BQ. The system of feature BL, further comprising a safety module capable of detecting the presence of objects too close to the illuminator and shutting off the illumination beam.
BR. A night vision surveillance system, comprising: a camera having a field of regard; an infrared (IR) illuminator capable of producing an illumination beam; a computer capable of controlling the camera and the illuminator; and a safety module capable of detecting the presence of an object too close to the illuminator and shutting off the illumination beam.
BS. The system of feature BR, wherein the safety module comprises an imaging detector capable of detecting beam reflection going back into the illumination beam and a safety processor capable of analyzing the beam reflection and shutting off the illumination beam based on the analysis.
4BT. The system of feature BS, wherein the safety processor analyzes a shape of the beam reflection.
BU. The system of feature BR, wherein the safety module is capable of gradually starting up the illumination beam following shutting off the illumination beam.
4BT. The system of feature BU, wherein gradually starting up the illumination beam comprises turning the illumination beam on at a reduced power and determining if an object is still present and gradually increasing power of the illumination beam if no objects are detected.

## Claims

1. A night vision surveillance system, comprising:
i) a camera (202) having a field of regard;
ii) an infrared (IR) illuminator (211) capable of producing an illumination beam (230), wherein there is a parallax between the illumination beam and the camera's field of regard; and
iii) a computer (150) capable of controlling the camera and the
illuminator;
**further characterized in that:**
iv) the illuminator is an IR laser illuminator (211) and the illumination beam is an IR laser illumination beam (230).

2. The system of claim 1, further comprising a pan and tilt unit (104) supporting a camera unit (102) and an illumination unit (106) and capable of moving the camera and illuminator units, wherein the pan and tilt unit is controlled by the computer (150).

3. The system of claim 1 or claim 2, wherein said parallax is created by separation of the camera unit (102) and the illumination unit (106).

4. The system of any of claims 1 to 3, wherein a focal length of the camera (202) and a focal length of the illuminator (204) are capable of moving in unison.

5. The system of any of claims 1 to 4 further comprising a safety module (128) capable of detecting the presence of an object too close to the illuminator (211) and shutting off the illumination beam (230).

6. The system of claim 5, wherein the safety module (128) comprises an imaging detector (160) capable of detecting beam reflection going back into the illumination beam (230) and a safety processor (162) capable of analyzing the beam reflection and shutting off the illumination beam based on the analysis.

7. The system of claim 6, wherein the safety processor (162) analyzes a shape of the beam reflection.

8. The system of any of claims 5 to 7, wherein the safety module (128) is capable of gradually starting up the illumination beam (230) following shutting off the illumination beam.

9. The system of claim 8, wherein gradually starting up the illumination beam (230) comprises turning the illumination beam on at a reduced power and determining if an object is still present and gradually increasing power of the illumination beam if no objects are detected.

10. The system of any of claims 1 to 9, wherein a laser source (122) for the IR laser illuminator (211) is a continuous wave laser.

11. The system of any of claims 2 to 10, wherein the camera unit (102) has a spectral filter mechanism (222) which includes at least one narrow bandwidth or cut-off filter and movement mechanism; the narrow bandwidth filter transmitting the laser wavelength and rejecting other light bands.

12. A night vision surveillance method using a camera (202) having a field of regard, comprising:
i) receiving an image of the camera's current field of view;
ii) capturing the image by the camera using an infrared (IR) illuminator (211);
iii) creating a parallax between the illumination beam and the camera's field of regard; and
iv) controlling the camera and the illuminator;
**characterized by:**
v) using an IR laser illuminator (211).

13. The method of claim 12 further comprising moving a focal length of the camera (202) and a focal length of the illuminator (204) in unison.

14. The method of claim 12 or claim 13 further comprising using an IR continuous wave laser source (211).

15. The method of any of claims 12 to 14 further comprising separating the camera unit (102) and the illumination unit (106) to create said parallax.
